# EUROPÄISCHE PATENTANMELDUNG

(11) **EP 0 651 254 A1**
(43) Veröffentlichungstag der Anmeldung: **03.05.1995**
(21) Anmeldenummer: 94116310.7
(22) Anmeldetag: 17.10.1994
(51) Int. Cl.: G01N 35/00, B01L 9/00

(54) **Reagenzien-Kit und ein Analysengerät, in dem er verwendbar ist**

(30) Priorität: 28.10.1993 CH 3254/93
(71) Anmelder: F. HOFFMANN-LA ROCHE AG, CH-4002 Basel (CH)
(72) Erfinder: Henzen, Ignatz Wolfgang, CH-6330 Cham (CH)
(74) Vertreter: Ventocilla, Abraham

(57) **Zusammenfassung**

Reagenzien-Kit, der wenigstens einen Behälter enthält, in dem ein Reagenz enthalten ist, und ein Analysengerät, in dem ein derartiges Reagenzien-Kit verwendbar ist.

Um die Haltung der Reagenzien bei einer geeigneten Temperatur zu ermöglichen, ist der Reagenzien-Kit dadurch gekennzeichnet, dass er sich im wesentlichen aus einem Gehäuse (12), das einen Boden (13) und Seitenwände (14-18) hat, und dem im Gehäuse enthaltenen wenigstens einen Behälter (31, 32) zusammensetzt, wobei das Gehäuse aus einem Material besteht, dessen thermische Leitfähigkeit grösser als diejenige von Luft ist, und wenigstens eine Innenwand (43-46) hat, die formschlüssig wenigstens mit einem Teil der äusseren Wand des wenigstens einen Reagenzbehälters (31, 32) in Kontakt ist. Im Analysengerät werden die Reagenzien-Kits auf einer Trägerplatte angeordnet, die mittels eines Peltier-Elementes gekühlt wird.

## Beschreibung

Die Erfindung betrifft einen Reagenzien-Kit, der wenigstens einen Behälter enthält, in dem ein Reagenz enthalten ist.

Die Erfindung betrifft ferner ein automatisches Analysengerät, das eine Vielzahl von Reagenzien-Kits aufnehmen kann.

In automatischen Analysengeräten ist eine automatische Behandlung von Reagenzien- Kits erwünscht, d.h. zur Verwendung der Reagenzien-Kits, die in einem Analysengerät verwendet werden, sollten keine manuell durchgeführte Handlungen notwendig sein. Die Lösung dieser Aufgabe wird dadurch erschwert, dass die Reagenzbehälter vor deren ersten Benutzung im Analysengerät und zwischen Pipettiervorgängen mit einem Verschluss verschlossen sein sollten, um Reagenzverluste bzw. eine zu kurze Brauchbarkeitsdauer der Reagenzien zu vermeiden.

In automatischen Analysengeräten, in denen eine Vielzahl von Reagenzbehältern mit verschiedenen Reagenzien und eine Vielzahl von Reaktionsgefässen mit verschiedenen Proben vorhanden sind, ist ferner erwünscht, dass die Pipettiervorrichtung einen frei gewählten Zugang ("random access") zu einem beliebigen Reagenzbehälter bzw. zu einem beliebigen Reaktionsgefäss hat.

In automatischen Analysengeräten, in denen eine Vielzahl von Reagenzbehältern mit verschiedenen Reagenzien gehalten werden, ist ausserdem erwünscht, dass die Reagenzien auf einer bestimmten Temperatur gekühlt gehalten werden.

Der Erfindung liegt daher die zweiteilige Aufgabe zugrunde, einen Reagenzien-Kit und ein Analysengerät zur Verfügung zu stellen, mit denen alle oben erwähnten Ziele erreicht werden können.

Erfindungsgemäss wird der erste Teil dieser Aufgabe mit einem Reagenzien-Kit gelöst, der dadurch gekennzeichnet ist, dass er sich im wesentlichen aus einem Gehäuse, das einen Boden und Seitenwände hat, und wenigstens einem im Gehäuse enthaltenen Behälter zusammensetzt, wobei das Gehäuse aus einem Material besteht, dessen thermische Leitfähigkeit grösser als diejenige von Luft ist, und wenigstens eine Innenwand hat, die formschlüssig wenigstens mit einem Teil der äusseren Wand des wenigstens einen Reagenzbehälters in Kontakt ist.

Der wesentliche Vorteil des erfindungsgemässen Reagenz-Kits liegt darin, dass er insbesondere für die Haltung der Reagenzien auf der gewünschten Temperatur gekühlt geeignet ist.

Erfindungsgemäss wird der zweite Teil der oben erwähnten Aufgabe mit einem Analysengerät gelöst, welches dadurch gekennzeichnet ist, dass es folgende Komponenten enthält:
eine Trägerplatte, auf der im Analysengerät aufgenommene, erfindungsgemässe Reagenzien-Kits angeordnet werden können, einen Peltier-Element zur Kühlung der Trägerplatte und dadurch der Reagenzien-Kits und der darin enthaltenen Reagenzbehälter, und eine automatische Pipettiervorrichtung mit der die im Analysengerät erforderlichen Pipettierungen durchgeführt werden, wobei unter anderem bestimmte Reagenzvolumina aus den Reagenzbehältern entnommen und zu bestimmten Reaktionsgefässen übertragen werden, die je eine zu untersuchende Probe enthalten.

Die wesentlichen Vorteile des erfindungsgemässen Analysengerätes sind wie folgt:
Das erfindungsgemässe Analysengerät ermöglicht eine vollautomatische Behandlung der Reagenzien-Kits. Dadurch wird einerseits der Bedarf nach Arbeitsaufwand für die Bedienung des Analysengerätes verringert, andererseits die Zuverlässigkeit bei der Durchführung einer grossen Zahl verschiedener Untersuchungen erhöht, für deren Durchführung eine entsprechend grosse Zahl verschiedener Reagenzien bzw. Reagenzienkombinationen erforderlich ist.

Ein Ausführungsbeispiel der Erfindung wird im folgenden anhand der beiliegenden Zeichnungen beschrieben. Es zeigen:
- Fig. 1: eine perspektivische Ansicht einer ersten Ausführnngsform eines erfindungsgemässen Reagenzien-Kits 11,
- Fig. 2: einen Reagenzien-Kit 11 gemäss Fig. 1 und einen Dorn 67 zur Prüfung bzw. zur Oeffnung der vorgestanzten Stelle 56 des Deckels 18 des Reagenzien-Kits 11,
- Fig. 3: eine Draufsicht des Reagenzien-Kits 11 gemäss Fig. 1,
- Fig. 4: eine Druntersicht des Reagenzien-Kits 11 gemäss Fig. 1,
- Fig. 5: einen schematischen Querschnitt des Reagenzien-Kits 11 gemäss Fig. 1,
- Fig. 6: eine perspektivische Ansicht einer zweiten Ausführungsform eines erfindungsgemässen Reagenzien-Kits,
- Fig. 7: eine Draufsicht des Reagenzien-Kits gemäss Fig. 6,
- Fig. 8: eine perspektivische Ansicht einer dritten Ausführungsform eines erfindungsgemässen Reagenzien-Kits,
- Fig. 9: eine Draufsicht des Reagenzien-Kits gemäss Fig. 8,
- Fig. 10: eine perspektivische Ansicht eines Trägers (Rack) zur Aufnahme von erfindungsgemässen Reagenzien-Kits,
- Fig. 11: eine perspektivische Ansicht des Trägers (Rack) gemäss Fig. 10 mit einer Anzahl darauf angeordneten erfindungsgemässen Reagenzien-Kits,
- Fig. 12: eine Draufsicht einer Anordnung mehrerer Träger mit Reagenzien-Kits auf einer darauf vorgesehenen Trägerplatte in einem Analysengerät,
- Fig. 13: eine Ansicht im Querschnitt einer Trägerplatte für Träger von erfindungsgemässen Reagenzien-Kits und von Peltier-Elementen zur Kühlung der Trägerplatte
- Fig. 14: eine Ansicht, teilweise im Querschnitt, eines der Verschlüsse 34-36 in Fig. 1,
- Fig. 15: eine Ansicht, teilweise im Querschnitt, des Deckels 81 in Fig. 14,
- Fig. 16: einen Querschnitt des Stopfens 91 in Fig. 14,
- Fig. 17: eine Ansicht, teilweise im Querschnitt, des Verschlusses 34 gemäss Fig. 13 und eines darin eingesetzten Dorns 67, und
- Fig. 18: eine Ansicht, teilweise im Querschnitt, des Verschlusses 34 gemäss Fig. 13 und einer dadurch eingeführten Pipettiernadel 101.

### Erste Ausführungsform eines erfindungsgemässen Reagenzienkits

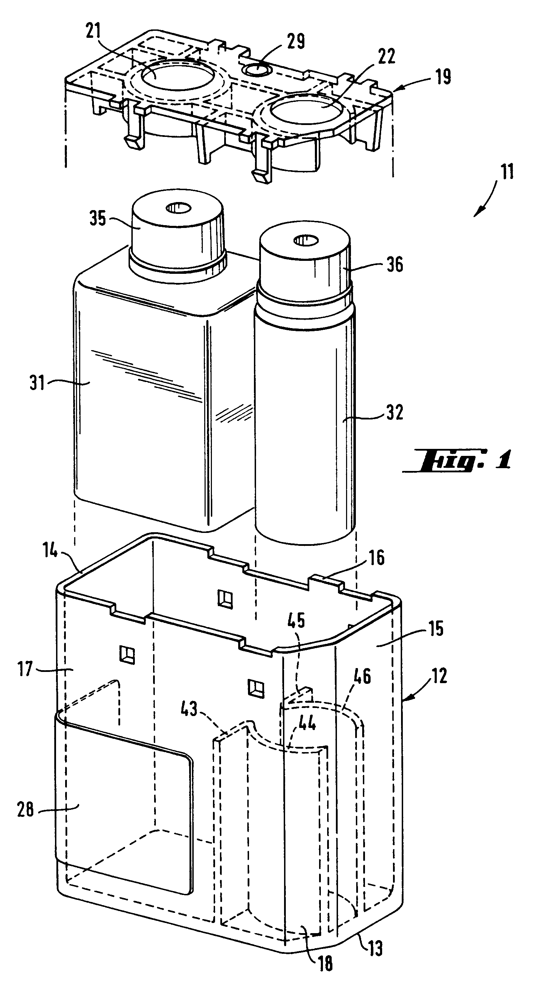

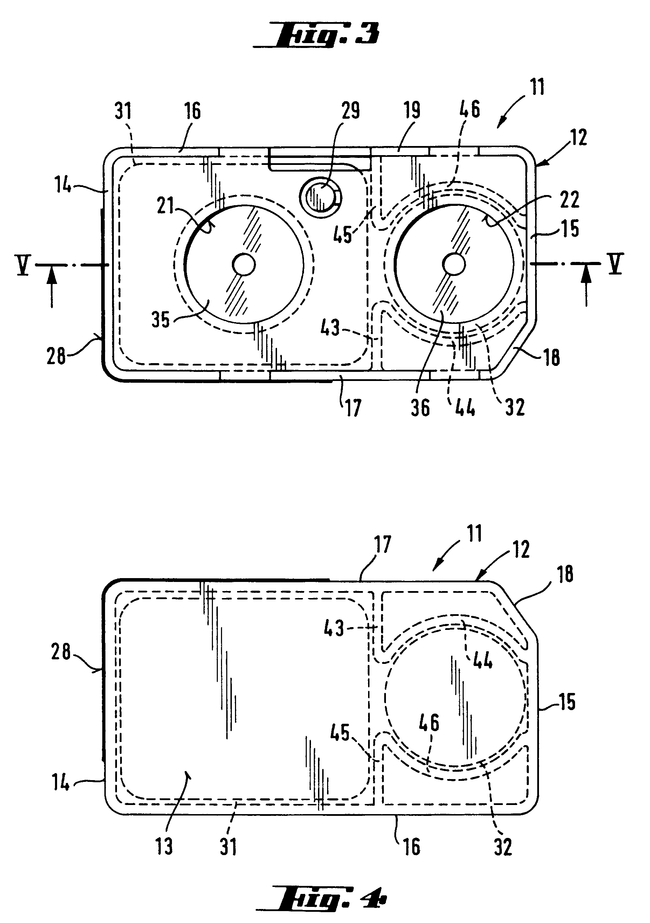

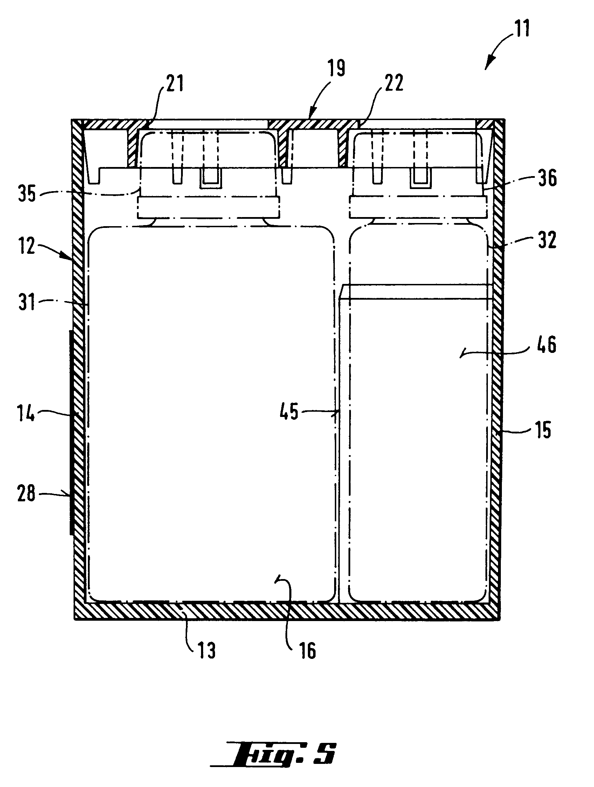

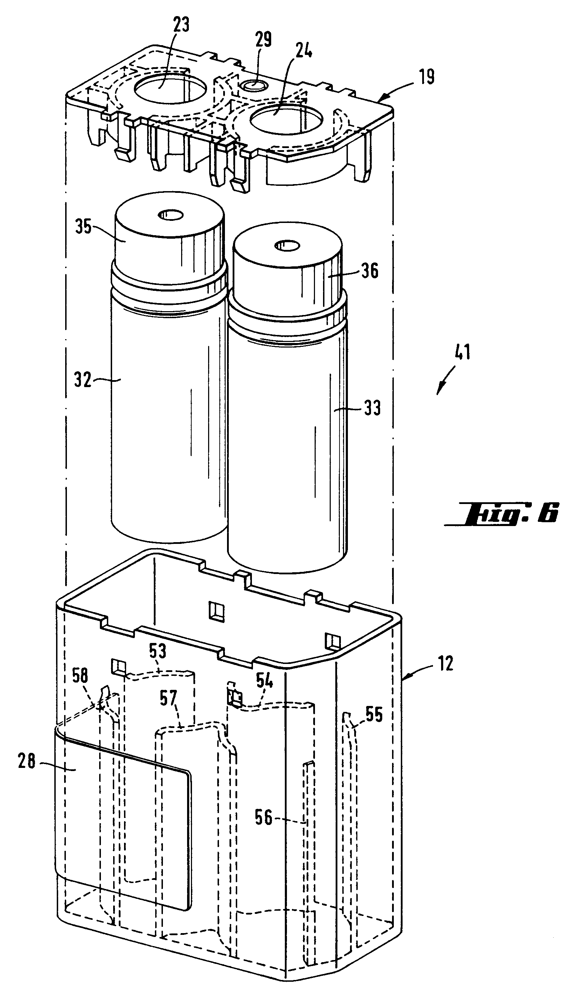

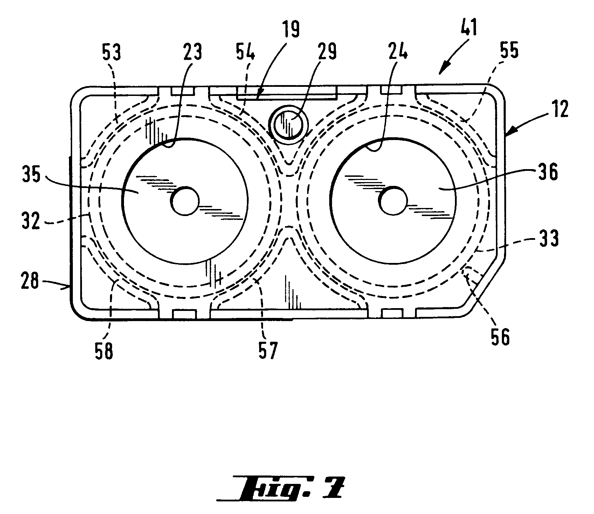

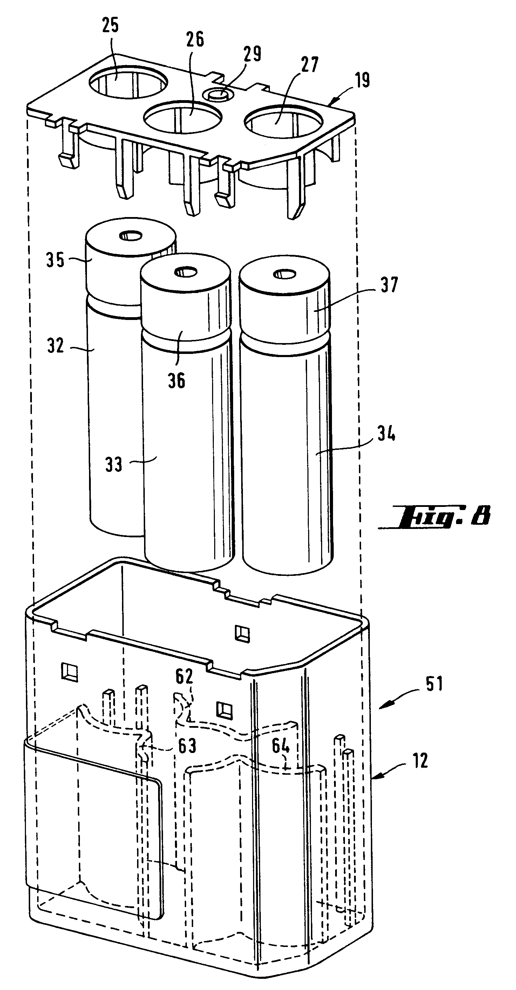

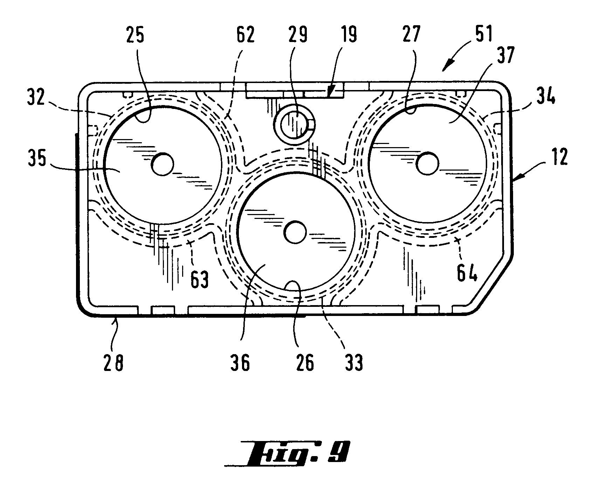

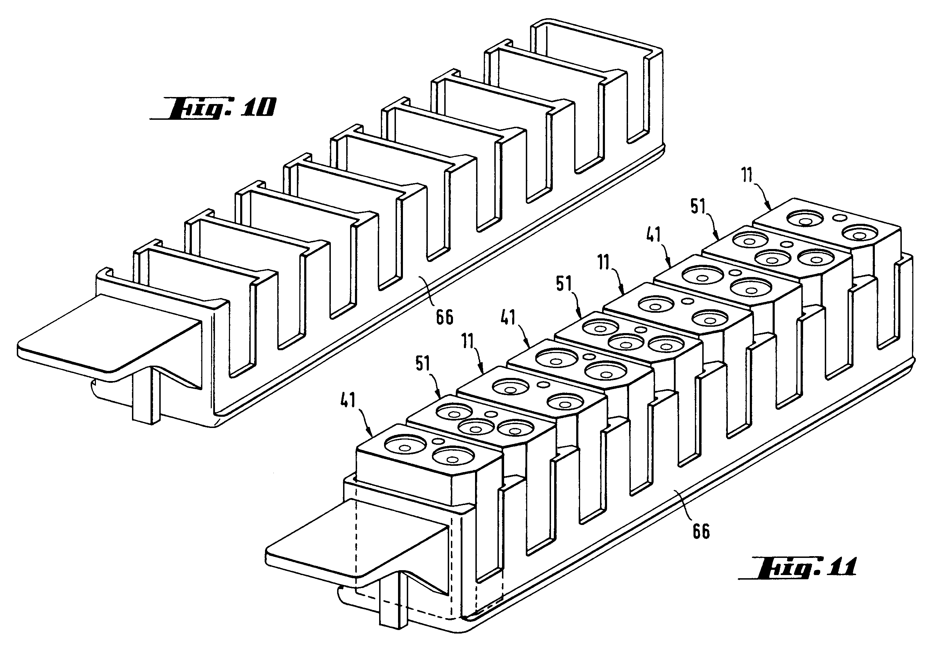

Eine erste Ausführungsform eines erfindungsgemässen Reagenzien-Kits wird nachstehend anhand der Figuren 1-5 beschrieben.

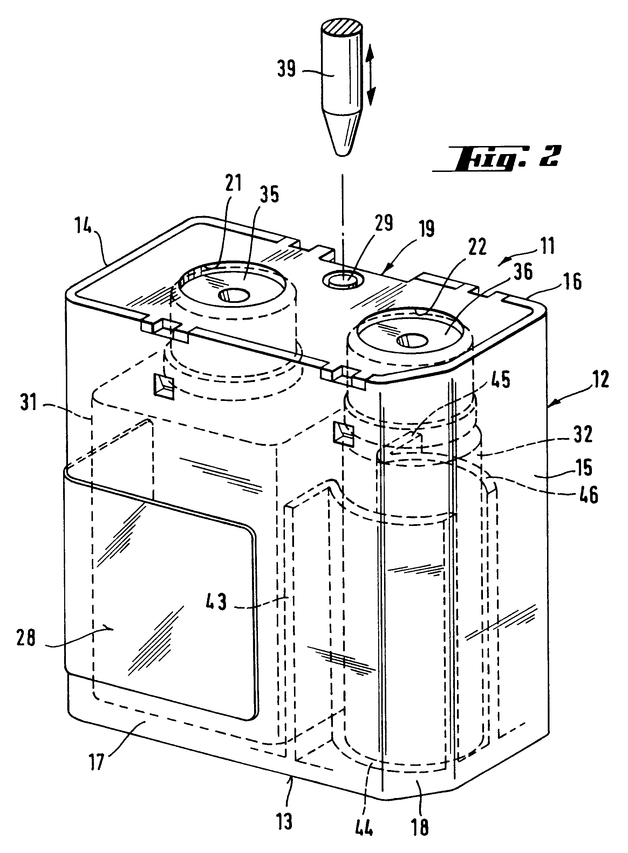

Wie in Fig. 1 dargestellt, setzt sich ein erfindungsgemässes Reagenzien-Kit 11 im wesentlichen aus einem quaderförmigen Gehäuse 12 und aus Behältern 31, 32 zusammen, die wie in Figuren 2-4 im Gehäuse 12 angeordnet werden. Die Reagenzbehälter 31, 32 können Glas oder aus einem geigneten Kunststoff sein, z.B. aus Polyäthylen niedriger Dichte (LDPE) oder aus Polyäthylen hoher Dichte (HDPE). In der ersten Ausführungsform gemäss Figuren 1-5 hat der Körper des Reagenzbehälters 31 die Form eines Quaders; der Körper des Reagenzbehälters 32 ist zylindrisch.

Das Gehäuse 12 wird aus einem Material hergestellt, dessen thermische Leitfähigkeit grösser als diejenige von Luft ist, z.B. aus einem thermisch leitenden Kunststoff, wie z.B. Polystyrol.

Das Gehäuse 12 hat einen Boden 13, Seitenwände 14, 15, 16, 17,18 und einen abnehmbaren Deckel 19. Wichtig für die erfindungsgemässe Funktion des Behälters 12 ist, dass er Innenwände hat, die formschlüssig wenigstens mit einem Teil der äusseren Wand jedes der im Gehäuse enthaltenen Reagenzbehälter in Kontakt ist. Wie insbesondere aus Fig. 2-5 ersichtlich, hat das Gehäuse 12 Innenwände 43, 44, 46, die dazu vorgesehen sind, mit je einem Teil der äusseren Wand der Reagenzbehälter 31, 32 formschlüssig in Kontakt zu kommen.

Wie aus Figuren 1 und 2 ersichtlich, hat der Deckel 19 eine vorgestanzte Stelle 29 die mit einem Dorn 39 geöffnet werden kann.

Der Deckel 19 des Gehäuses 12 weist Oeffnungen 21, 22 auf, durch die die Inhalte der Reagenzbehälter 31, 32 für automatisch durchgeführte Pipettiervorgänge zugänglich sind.

Das Gehäuse 12 trägt eine maschinenlesbare Etikette 28, die auf benachbarte Seitenwände des Gehäuses 12 angebracht ist. Diese Ettikette trägt Information über den im Gehäusse enthaltenen Reagenzien.

Das Gehäuse 12 gemäss Figuren 1-5 kann z.B. für einen Test mit 2 Komponenten mit einem Behälter mit 12,5 ml von einem Reagenz R1 und einem Behälter mit 6,5 ml von einem Startreagenz bestückt werden.

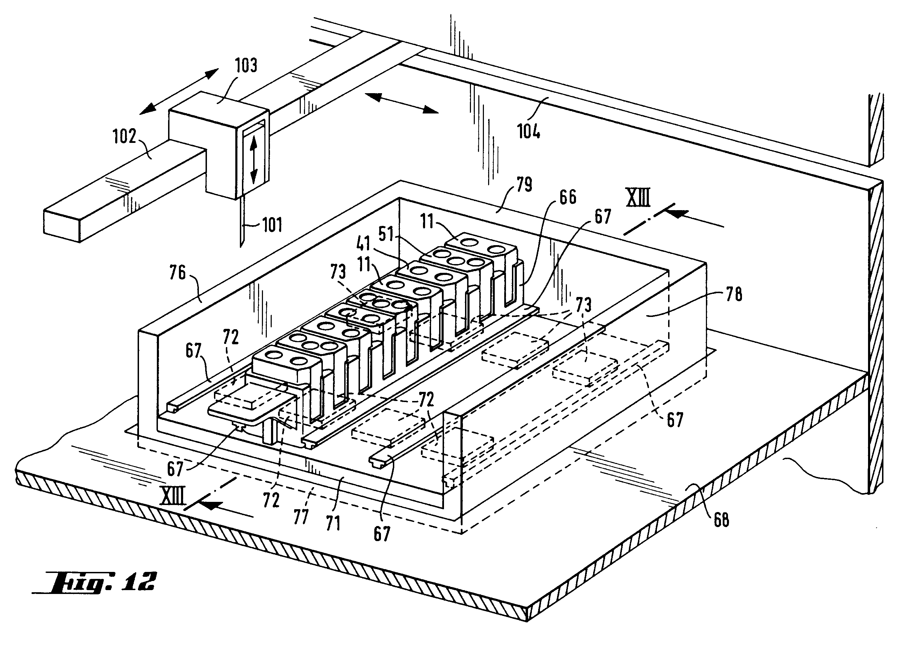

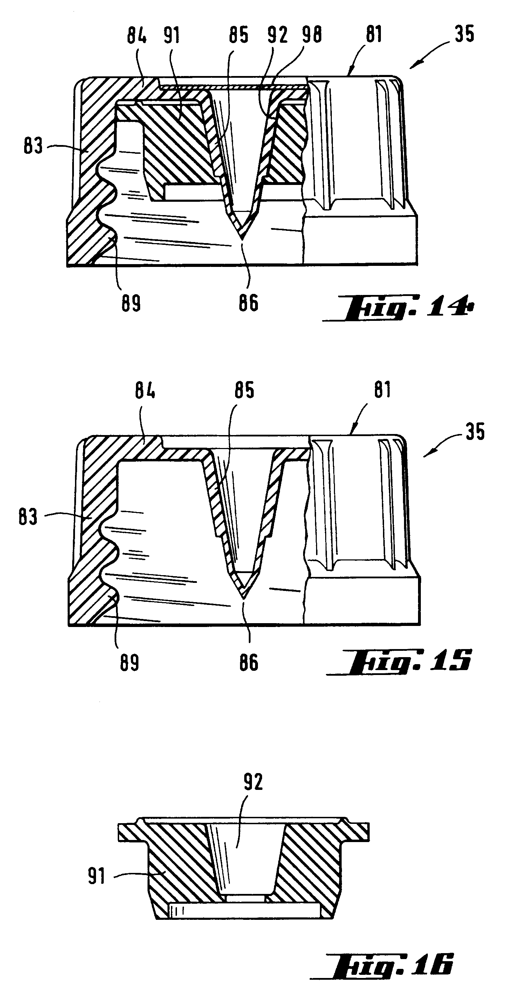

Jeder der Reagenzbehälter ist mit einem Verschluss 35, 36 geschlossen, der durch eine in Fig. 12 dargestellte Pipettiernadel 101 der Pipettiervorrichtung eines Analysengerätes durchstechbar ist, der sich aber nach Entfernung der Pipettiernadel wiederschliesst. Die Verschlüsse 35, 36 sind vorzugsweise Verschlüsse gemäss der europäischen Patentanmeldung mit Veröffentlichungsnummer EP-A - 0 504697 A1. Diese Verschlüsse sind nachstehend anhand der Figuren 14-18 beschrieben.

### Zweite Ausführungsform eines erfindungsgemässen Reagenzienkits

Eine zweite Ausführungsform 41 eines erfindungsgemässen Reagenzien-Kits wird nachstehend anhand der Figuren 6 und 7 beschrieben.

Diese zweite Ausführungsform unterscheidet sich von der ersten Ausführungsform gemäss Figuren 1-5 lediglich durch eine andere Form der Reagenzbehälter und eine entsprechend andere Form der Innenwände. In dieser zweiten Ausführungsform sind beide Reagenzbehälter 32, 33 zylindrisch und beide haben die gleichen Abmessungen.

Das Gehäuse 12 gemäss Figuren 6 und 7 hat die gleiche äussere Form und die gleiche äussere Abmessungen wie das Gehäuse 12 gemäss Figuren 1-5.

Das Gehäuse 12 gemäss Figuren 6 und 7 hat Innenwände 53, 54, 55, 56, 57, 58, die dazu vorgesehen sind, mit je einem Teil der äusseren Wand der Reagenzbehälter 32, 33 formschlüssig in Kontakt zu kommen.

Das Gehäuse 12 gemäss Figuren 6 und 7 kann z.B. für einen Test mit 1 Komponente mit zwei Behältern mit 12,5 ml von einem Reagenz bestückt werden.

### Dritte Ausführungsform eines erfindungsgemässen Reagenzienkits

Eine dritte Ausführungsform eines erfindungsgemässen Reagenzien-Kits wird nachstehend anhand der Figuren 8 und 9 beschrieben.

Diese dritte Ausführungsform unterscheidet sich von der zweiten Ausführungsform gemäss Figuren 6-7 im wesentlichen durch die Anzahl der Reagenzbehälter im Gehäuse 12 und durch eine entsprechend geänderte Form der Innenwände. In dieser dritten Ausführungsform enthält das Gehäuse 12 drei Behälter 32, 33, 34. Diese sind zylindrisch und haben die gleichen Abmessungen.

Das Gehäuse 12 gemäss Figuren 8 und 9 hat die gleiche äussere Form und die gleiche äussere Abmessungen wie das Gehäuse 12 gemäss Figuren 1-5.

Das Gehäuse 12 gemäss Figuren 8 und 9 hat Innenwände 62, 63, 64, die dazu vorgesehen sind, mit je einem Teil der äusseren Wand der Reagenzbehälter 32, 33, 34 formschlüssig in Kontakt zu kommen.

Das Gehäuse 12 gemäss Figuren 8 und 9 kann z.B. für einen Test mit 3 Komponenten mit einem Behälter mit 6.5 ml von einem Reagenz R1, einem Behälter mit 6.5 ml von einem Reagenz R2, und einem Behälter mit 6,5 ml von einem Startreagenz.

### Träger für erfindungsgemässe Reagenzien-Kits

In Figuren 10 und 11 ist ein Träger 66 für erfindungsgemässe Reagenzien-Kits 11, 41 bzw. 51 dargestellt. Im Rahmen der Erfindung ist es vorgesehen, dass auch der Träger 66 aus einem thermisch leitenden Material, z.B. aus einem Metal wie z.B. Aluminium hergestellt wird. Im Rahmen der Erfindung ist es ferner vorgesehen, eine Kühlung der in den Reagenzbehälter enthaltenen Reagenzien zu erzielen, in dem die Reagenzbehälter über die Innenwände der Gehäuse 12 und über den Träger 66 mit einer Kühlvorrichtung in Kontakt gebracht werden.

### Beispiel eines erfindungsgemässen Analysengerätes

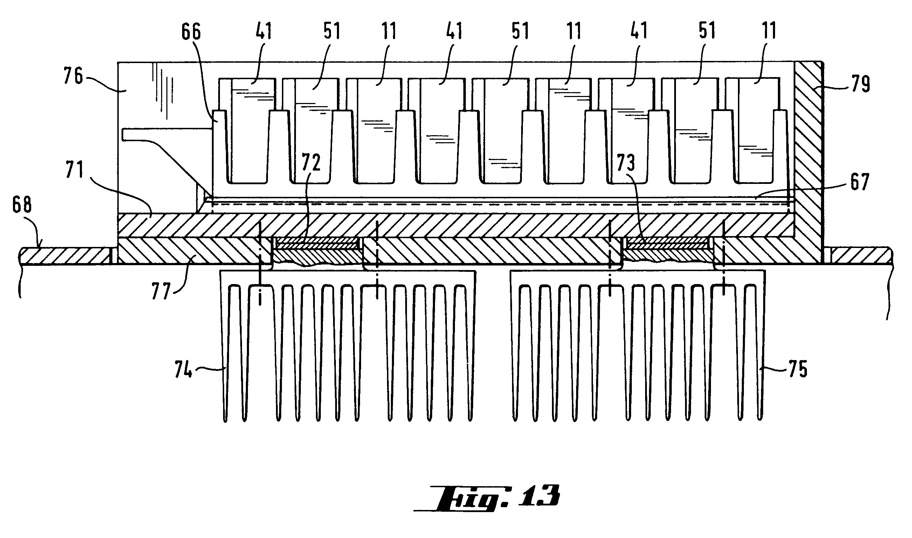

Wie anhand der Figuren 12 und 13 nachstehend beschrieben, ist ein erfindungsgemässes automatisches Analysengerät dazu geeignet, eine Vielzahl der oben beschriebenen Reagenzien-Kits 11, 41, 51 aufzunehmen. Wie in der Fig. 12 dargestellt, enthält ein solches Analysengerät folgende Komponenten:
- eine in einer Oeffnung einer Arbeitsfläche 68 des Analysengeräts auf einer Isolierwand 77 angeordnete Trägerplatte 71, auf der Träger 66 mit Reagenzien-Kits 11, 41, 51 auf Führungsschienen 67 angeordnet werden, wobei die Träger 66 mit den Reagenzien-Kits gegen aussen durch weitere Isolierwände 76, 78, 79 thermisch isoliert sind.
- eine Kühlvorrichtung (siehe Figuren 12 und 13), die Peltier-Elemente 72, 73 enthält, die in Oeffnungen der Isolierwand 77 angeordnet sind und in Kontakt mit der Trägerplatte 71 stehen, wobei jedes Peltier-Element mit einem Kühlkörper 74 bzw. 75 verbunden ist,
- eine automatische Pipettiervorrichtung mit der die im Analysengerät erforderlichen Pipettierungen durchgeführt werden.

Eine zentrale, in der Fig. 12 nicht gezeigten Steuereinrichtung steuert sämtliche Funktionen im Analysengerät.

Die Trägerplatte 71 wird mit der oben erwähnten Kühlvorrichtung gekühlt. Auf diese Weise wird eine gleichmässige Kühlung der in den Reagenzien-Kits enthaltenen Reagenzien erreicht.

Die oben erwähnte automatische Pipettiervorrichtung enthält eine Transporteinrichtung für eine Pipettiernadel 101. Diese Transporteinrichtung enthält einen Transportwagen 103 und eine Stange 102, auf die der Wagen 103 fährt. Diese Transporteinrichtung dient hauptsächlich dazu, die Pipettiernadel entlang drei zueinander senkrechten Richtungen, zu einer Vielzahl von Pipettierpositionen zu bringen, wo Pipettierungen durchgeführt werden.

Bei den soeben erwähnten Pipettierungen werden unter anderem bestimmte Reagenzvolumina aus den Reagenzbehältern entnommen und zu bestimmten Reaktionsgefässen übertragen, die je eine zu untersuchende Probe enthalten.

Während seiner ganzen Benutzungsdauer im Analysengerät ist jeder der Reagenzbehälter mit einem Verschluss 34, 35 bzw. 36 geschlossen, der durch die Pipettiernadel 101 der Pipettiervorrichtung durchstechbar ist.

Eine bevorzugte Ausführungsform des erfindungsgemässen Analysengerätes enthält eine Einrichtung, mit der die Unversehrtheit der in das Analysengerät aufgenommenen Reagenzien-Kits 11 geprüft werden kann. Diese Prüfeinrichtung besteht im wesentlichen aus dem in Fig. 2 dargestellten Dorn 39, der vom Transportwagen 103 der Pipettiernadel 101 getragen wird, und der mit einer nicht gezeigten Fühleinrichtung zusammenwirkt. Zur Prüfung der Unversehrtheit eines Reagenzien-Kits 11 wird der Dorn 39 von einem geeigneten Antrieb gegen der vorgestanzten Stelle 29 im Deckel 19 des Reagenzien-Kits 11 geführt. Trifft der Dorn 39 diese Stelle geschlossen, wird dies als Bestätigung der Unversehrtheit des Reagenzien-Kits 11 erfasst. Daraufhin wird diese Stelle durch einen geeigneten, mit dem Dorn ausgeübten Druck geöffnet, um den Reagenzien-Kit zu entwerten. Trifft der Dorn hingegen die vorgestanzte Stelle offen, wird dies als Kennzeichen eines Reagenzien- Kits erfasst, der bereits entwertet ist, und deshalb nicht verwendet werden sollte. Ist dies der Fall, wird der Reagenzien-Kit von der Transportvorrichtung zur Ausgabestelle gebracht.

Während des Betriebes des Analysengeräts werden wahlweise Reagenzvolumina aus einem der auf einem Träger 66 vorhandenen Reagenzien-Kits 11 entnommen und einem nicht gezeigten Reaktionsgefäss in einer ebenfalls nicht gezeigten Bearbeitungsstation fuhr Probe-Reagenz-Gemische zugeführt.

### Beschreibung der Verschlüsse der Reagenzbehälter

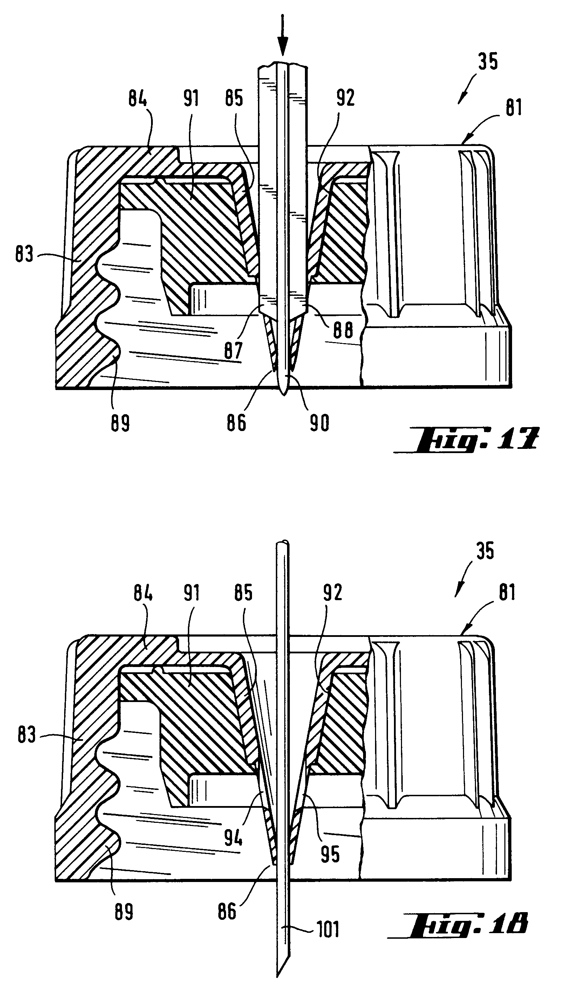

Die Verschlüsse 35-37 haben den gleichen Aufbau. Der Aufbau des Verschlusses 35 wird nachstehend anhand der Figuren 14-18 beschrieben. Wie in Fig. 14 gezeigt, setzt sich der Verschluss 35 im wesentlichen aus einem Deckel 81 gemäss Fig. 15 und einem Stopfen 91 gemäss Fig. 16, der zwischen dem Deckel 81 und dem Behälter als Abdichtung einsetzbar ist, und der z.B. aus Brombutylkautschuk hergestellt ist.

Der Deckel 81 gemäss Fig. 15 ist ein aus einem Kunststoff, z.B. aus Polyehtylen in einem Stück geformten Teil, vorzugsweise 50% Polyäthylen nidriger Dichte (LDPE) und 50% Polyäthylen hoher Dichte (HDPE). Er hat eine zylindrische Seitenwand 83 und eine ringförmige, an der Seitenwand angrenzende obere Wand 84, die in eine kegelförmige Wand 85 übergeht, die sich vom inneren Kreis der oberen Wand nach innen erstreckt und in einer auf der Symmetrieachse der zylindrischen Wand liegenden Spitze 86 endet, die z.B. durch die Pipettiernadel einer automatischen Pipettiervorrichtung durchstechbar ist. Einen ersten, an der oberen Wand 84 angrenzenden Teil der kegelförmigen Wand 85 bildet mit der Symmetrieachse der zylindrischen Seitenwand 83 einen Winkel von 10 Grad. Die kegelförmige Wand 85 hat einen zweiten Teil, der die Spitze 86 der kegelförmigen Wand bildet, und der mit der Symmetrieachse der zylindrischen Seitenwand 83 einen Winkel von 30 Grad bildet.

Der Deckel 81 ist ein Schraubverschluss, der in seiner Seitenwand 83 ein Innengewinde 89 hat, der einem Aussengewinde im Hals des (nicht gezeigten) Reagenzbehälters entspricht, der mit dem Verschluss 35 verschlossen wird.

Der Zugang zur kegelförmigen Wand 85 ist vorzugsweise mit einer metallischen Siegelfolie 98 abgedichtet.

Der Stopfen 91 gemäss Fig. 16 hat in der Mitte einen Durchgang 92, dessen Form der Aussenfläche der kegelförmigen Wand 85 des Deckels so angepasst ist, dass wenn der Behälter mit dem Stopfen 91 und dem Deckel 81 verschlossen wird, die Aussenfläche der kegelförmigen Wand 85 sich gegen die Innenwand des Durchgangs 92 des Stopfens 91 abdichtend anlegt.

Die Benutzung des Verschlusses 35 gemäss Fig. 14 wird nachstehend anhand der Figuren 17 und 18 beschrieben.

Wie in Fig. 17 gezeigt wird die Spitze 86 der kegelförmigen Wand 85 mit der Spitze eines Dorns 90 durchgestochen, der Schneideflügel 87, 88 hat. Dabei schneiden die unteren scharfen Kanten der Schneideflügel 87, 88 in den unteren Teil der kegelförmigen Wand 85 ein. Nach Entfernung des Dorns 90 bleibt weist die kegelförmige Wand 85 Schlitze 94, 95 zur Entlüftung auf.

Wie in Fig. 18 gezeigt, kann nun eine Pipettiernadel 101 durch die vom Dorn 90 hinterlassene zentrale Oeffnung an der Spitze 86 der kegelförmigen Wand 85 in den Reagenzbehälter eingeführt werden, z.B. um ein bestimmtes Volumen eines dort enthaltenen flüssigen Reagenz zu entnehmen.

## Patentansprüche

1. Reagenzien-Kit, der wenigstens einen Behälter enthält, in dem ein Reagenz enthalten ist,
dadurch gekennzeichnet, dass
er sich im wesentlichen aus einem Gehäuse (12) , das einen Boden (13) und Seitenwände (14-18) hat, und dem im Gehäuse enthaltenen wenigstens einen Behälter (31, 32) zusammensetzt, wobei das Gehäuse aus einem Material besteht, dessen thermische Leitfähigkeit grösser als diejenige von Luft ist, und wenigstens eine Innenwand (43-46) hat, die formschlüssig wenigstens mit einem Teil der äusseren Wand des wenigstens einen Reagenzbehälters (31, 32) in Kontakt ist.

2. Reagenzien-Kit gemäss Anspruch 1, dadurch gekennzeichnet, dass das Gehäuse einen abnehmbaren Deckel (19) hat, der Oeffnungen aufweist, durch die die Inhalte der Reagenzbehälter für automatisch durchgeführte Pipettiervorgänge zugänglich sind.

3. Reagenzien-Kit gemäss Anspruch 1, dadurch gekennzeichnet, dass jeder Reagenzbehälter mit einem Verschluss (35, 36) geschlossen ist, der durch die Pipettiernadel (101) der Pipettiervorrichtung des Analysengerätes durchstechbar ist, der sich aber nach Entfernung der Pipettiernadel wieder schliesst.

4. Automatisches Analysengerät, das eine Vielzahl Reagenzien-Kits (11. 41, 51) gemäss Anspruch 1 aufnehmen kann, dadurch gekennzeichnet, dass es folgende Komponenten enthält:
eine Trägerplatte (71), auf der im Analysengerät aufgenommenen Reagenzien-Kits (11, 41, 51) angeordnet werden können,
einen Peltier-Element (72, 73) zur Kühlung der Trägerplatte (71) und dadurch der Reagenzien-Kits (11, 41, 51) und der darin enthaltenen Reagenzbehälter (31, 32), und
eine automatische Pipettiervorrichtung (102-104) mit der die im Analysengerät erforderlichen Pipettierungen durchgeführt werden, wobei unter anderem bestimmte Reagenzvolumina aus den Reagenzbehältern (31, 32) entnommen und zu bestimmten Reaktionsgefässen übertragen werden, die je eine zu untersuchende Probe enthalten.
